(19) Europäisches Patentamt / European Patent Office / Office européen des brevets

(11) **EP 3 672 051 A1**

(12) **EUROPEAN PATENT APPLICATION**
published in accordance with Art. 153(4) EPC

(43) Date of publication:
**24.06.2020 Bulletin 2020/26**

(51) Int Cl.:
***H02M 3/155*** (2006.01)

(21) Application number: **18863423.2**

(22) Date of filing: **22.08.2018**

(86) International application number:
**PCT/JP2018/030920**

(87) International publication number:
**WO 2019/065005 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2017  JP 2017186239**

(71) Applicant: **Mitsubishi Heavy Industries Thermal Systems, Ltd.**
**Tokyo 108-8215 (JP)**

(72) Inventors:
• **AIBA, Kenichi**
  **Tokyo 108-8215 (JP)**
• **KUHARA, Masakazu**
  **Tokyo 108-8215 (JP)**

(74) Representative: **Studio Torta S.p.A.**
**Via Viotti, 9**
**10121 Torino (IT)**

(54) **CONTROL DEVICE, CONTROL METHOD, AND PROGRAM**

(57)    A control device includes: a control unit configured to generate a plurality of control signals for controlling a current flowing in a circuit in which a current in accordance with a difference voltage between both ends of a reactor flows; and a distortion measurement unit configured to measure distortion of the current flowing in the circuit with regard to the plurality of control signals.

## FIG. 2

**Description**

[Technical Field]

The present invention relates to a control device, a control method, and a program.
Priority is claimed on Japanese Patent Application No. 2017-186239, filed September 27, 2017, the content of which is incorporated herein by reference.

[Background Art]

Converter devices are used in diverse fields. Patent Document 1 discloses a technology for achieving miniaturization and simplification of a device by applying a converter device to an air conditioner.

[Citation List]

[Patent Literature]

[Patent Document 1]
Japanese Unexamined Patent Application, First Publication No. 2014-150622

[Summary of Invention]

[Technical Problem]

Incidentally, in a motor driving device disclosed in Patent Document 1, a current in accordance with a difference voltage between both ends of a reactor flows through the reactor in the converter device. Therefore, in the motor driving device disclosed in Patent Document 1, distortion of an input current may increase due to distortion of a power supply voltage.
Accordingly, in a circuit in which a current in accordance with a difference voltage between both ends of a reactor flows through the reactor in the converter device disclosed in Patent Document 1, a technology capable of reducing distortion of an input current incurred due to distortion of a power supply voltage is required.
An objective of the present invention is to provide a control device, a control method, and a program capable of solving the foregoing problem.

[Solution to Problem]

A first aspect of the present invention provides a control device including: a control unit configured to generate a plurality of control signals for controlling a current flowing in a circuit in which a current in accordance with a difference voltage between both ends of a reactor flows; and a distortion measurement unit configured to measure distortion of the current flowing in the circuit with regard to the plurality of control signals.
A second aspect of the present invention provides the control device in the first aspect including, the control unit is configured to generate a plurality of control signals for controlling a current flowing in a converter circuit in which the current in accordance with the difference voltage between both ends of the reactor flows, and the distortion measurement unit is configured to measure distortion of the current flowing in the converter circuit with regard to the plurality of control signals.
A third aspect of the present invention provides the control device in the first or second aspect including, the control unit is configured to generate the control signal with regard to distortion which is a local minimum value or a smallest value among the distortions with regard to the plurality of control signals and to control the circuit using the generated control signal.
A fourth aspect of the present invention provides a control method including the steps of: generating a plurality of control signals for controlling a current flowing in a circuit in which a current in accordance with a difference voltage between both ends of a reactor flows; and measuring distortion of the current flowing in the circuit with regard to the plurality of control signals.
A fifth aspect of the present invention provides a program which is configured to cause a computer to execute the steps of: generating a plurality of control signals for controlling a current flowing in a circuit in which a current in accordance with a difference voltage between both ends of a reactor flows; and measuring distortion of the current flowing in the circuit with regard to the plurality of control signals.

[Advantageous Effects of Invention]

The control device, the control method, and the program according to an embodiment of the present invention can reduce distortion of an input current incurred due to distortion of a power supply voltage in a circuit in which a current in accordance with a difference voltage between both ends of a reactor flows.

[Brief Description of Drawings]

Fig. 1 is a diagram showing a configuration of a motor driving device according to an embodiment of the present invention.
Fig. 2 is a diagram showing a configuration of a converter control unit according to an embodiment of the present invention.
Fig. 3 is a diagram showing generation of a switching signal according to an embodiment of the present invention.
Fig. 4 is a diagram for explaining generation of a voltage instruction according to an embodiment of the present invention.
Fig. 5 is a first diagram for explaining a process flow of a converter control unit according to an embodiment of the present invention.
Fig. 6 is a second diagram showing a process flow of a converter control unit according to an embodiment of the present invention.

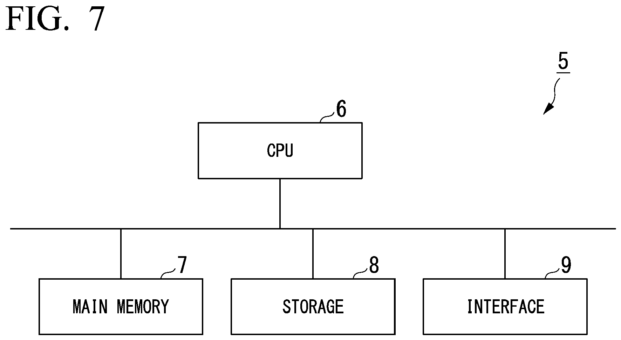

Fig. 7 is a schematic block diagram showing a configuration of a computer according to at least one embodiment.

[Description of Embodiments]

<Embodiments>

Hereinafter, an embodiment will be described in detail with reference to the drawings.
A motor driving device according to an embodiment of the present invention will be described.

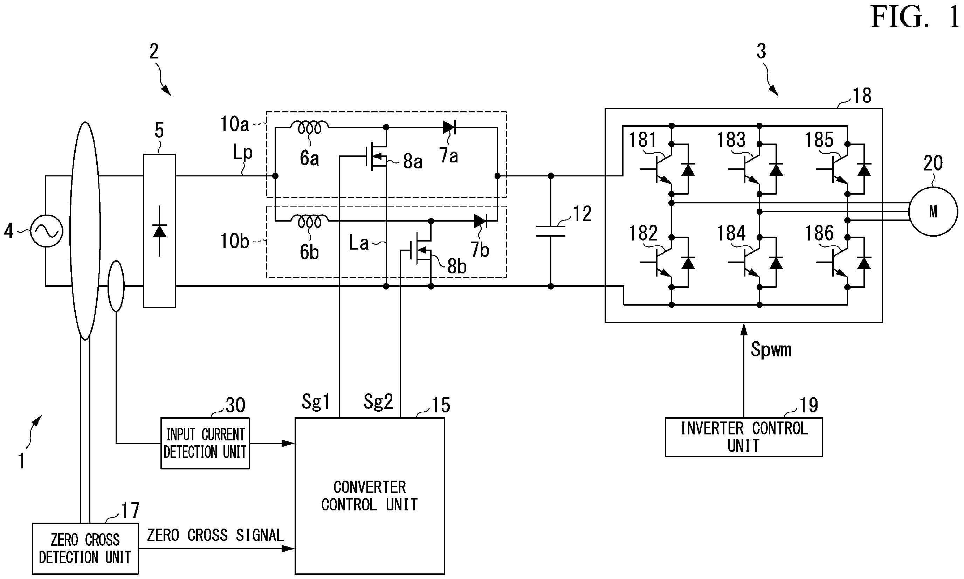

Fig. 1 is a diagram showing a configuration of a motor driving device 1 according to an embodiment of the present invention. The motor driving device 1 is a device that converts alternating-current power from an alternating-current power supply 4 into direct-current power and converts the direct-current power into three-phase alternating-current power to output the three-phase alternating-current power to a compressor motor 20. As shown in Fig. 1, the motor driving device 1 includes a converter device 2 (an example thereof is a circuit in which a current in accordance with a difference voltage between both ends of a reactor flows, a converter circuit) and an inverter device 3.
The converter device 2 is a device that converts alternating-current power from the alternating-current power supply 4 into direct-current power and outputs the direct-current power to the inverter device 3. The converter device 2 includes a rectifier circuit 5, a switching circuit 10a, a switching circuit 10b, a smoothing capacitor 12, a converter control unit 15, and an input current detection unit 30.
The rectifier circuit 5 includes an input terminal, an input side reference terminal, an output terminal, and an output side reference terminal. A potential of the input side reference terminal is a potential serving as a reference of a potential at the input terminal. A potential of the output side reference terminal is a potential serving as a reference of a potential at the output terminal. The rectifier circuit 5 converts the alternating-current power input from the alternating-current power supply 4 into direct-current power and outputs the direct-current power to the switching circuit 10a and the switching circuit 10b.
The switching circuit 10a causes a current to flow to the smoothing capacitor 12 and generates a voltage to be input to the inverter device 3. The switching circuit 10a includes a reactor 6a, a diode 7a, and a switching element 8a.
The reactor 6a includes a first terminal and a second terminal.
The diode 7a includes an anode terminal and a cathode terminal.
The switching element 8a includes a first terminal, a second terminal, and a third terminal. The switching element 8a controls a current flowing from the second terminal to the third terminal by switching between a period of an ON state and a period of an OFF state in accordance with a signal received by the first terminal, and changes a value of a current flowing in the switching circuit 10a. Examples of the switching element 8a include a field effect transistor (FET), an insulated gate bipolar transistor (IGBT), and the like. When the switching element 8a is, for example, an nMOS transistor, the first terminal of the switching element 8a is a gate terminal, the second terminal thereof is a source terminal, and the third terminal thereof is a drain terminal.
The switching circuit 10b causes a current to flow to the smoothing capacitor 12 and generates a voltage to be input to the inverter device 3 as in the switching circuit 10a. The switching circuit 10b includes a reactor 6b, a diode 7b, and a switching element 8b.

The reactor 6b includes a first terminal and a second terminal.

The diode 7b includes an anode terminal and a cathode terminal.

The switching element 8b includes a first terminal, a second terminal, and a third terminal as in the switching element 8a. The switching element 8b controls a current flowing from the second terminal to the third terminal by switching between a period of an ON state and a period of an OFF state in accordance with a signal received by the first terminal and changes a value of a current flowing in the switching circuit 10b. Examples of the switching element 8b include an FET, an IGBT, and the like. When the switching element 8b is, for example, an nMOS transistor, the first terminal of the switching element 8b is a gate terminal, the second terminal thereof is a source terminal, and the third terminal thereof is a drain terminal.

The smoothing capacitor 12 includes a first terminal and a second terminal. The smoothing capacitor 12 receives currents from both of the switching circuit 10a and the switching circuit 10b. That is, a voltage to be input to the inverter device 3 is determined in accordance with a total sum of values of the currents flowing from both of the switching circuit 10a and the switching circuit 10b to the smoothing capacitor 12.

The input current detection unit 30 includes an input terminal and an output terminal. The input current detection unit 30 detects a return current (hereinafter referred to as an "input current") to the alternating-current power supply 4. The input current detection unit 30 gives information regarding the detected input current to the converter control unit 15.

The converter control unit 15 includes a first input terminal, a second input terminal, a first output terminal, and a second output terminal. The converter control unit 15 receives information regarding an input current from the input current detection unit 30 via the first input terminal and observes the input current waveform. The converter control unit 15 controls the switching circuit 10a via the first output terminal. The converter control unit 15 controls the 10b via the second output terminal. The converter control unit 15 specifies a control signal with less distortion of the input current waveform from an input current waveform when at least one of a control signal Sg1 of the switching circuit 10a and a control signal Sg2 of the switching circuit 10b is changed.

The alternating-current power supply 4 includes an output terminal and a reference terminal. The alternating-current power supply 4 supplies alternating-current power to the converter device 2.

A zero cross detection unit 17 includes a first input terminal, a second input terminal, and an output terminal. The zero cross detection unit 17 detects a zero cross point of a voltage output by the alternating-current power supply 4 via the first input terminal and the second input terminal. A zero cross point indicates a time at which the voltage output by the alternating-current power supply 4 crosses a zero voltage and the time is a time of a reference in a process of the motor driving device 1. The zero cross detection unit 17 generates a zero cross signal including information regarding the zero cross point. The zero cross detection unit 17 outputs the zero cross signal to the converter control unit 15 via the output terminal.

The inverter device 3 is a device that converts the direct-current power output from the converter device 2 into three-phase alternating-current power and outputs the three-phase alternating-current power to the compressor motor 20. The inverter device 3 includes a bridge circuit 18 and an inverter control unit 19.

The bridge circuit 18 includes an input terminal, a first output terminal, a second output terminal, a third output terminal, and a reference terminal, as shown in Fig. 1. A potential of the reference terminal is a potential serving as a reference of a potential at each of the input terminal, the first output terminal, the second output terminal, and the third output terminal. The bridge circuit 18 includes switching elements 181, 182, 183, 184, 185, and 186. In the bridge circuit 18, the switching elements 181 and 182 are paired, the switching elements 183 and 184 are paired, and the switching elements 185 and 186 are paired. Each of the switching elements 181 to 186 includes a first terminal, a second terminal, and a third terminal. Each of the switching elements 181 to 186 controls a current flowing from the second terminal to the third terminal by switching between a period of an ON state and a period of an OFF state in accordance with a signal received by the first terminal, generates three-phase alternating-current power for driving the compressor motor 20, and outputs the generated three-phase alternating-current power to the compressor motor 20. Examples of each of the switching elements 181, 182, 183, 184, 185, and 186 include a power field effect transistor, an IGBT, and the like.

The inverter control unit 19 includes a first output terminal, a second output terminal, a third output terminal, a fourth output terminal, a fifth output terminal, and a sixth output terminal. The first output terminal of the inverter control unit 19 is a terminal that outputs a gate driving signal for switching between a period of an ON state and a period of an OFF state of the switching element 181 to the first terminal of the switching element 181. The second output terminal of the inverter control unit 19 is a terminal that outputs a gate driving signal for switching between a period of an ON state and a period of an OFF state of the switching element 182 to the first terminal of the switching element 182. The third output terminal of the inverter control unit 19 is a terminal that outputs a gate driving signal for switching between a period of an ON state and a period of an OFF state of the switching element 183 to the first terminal of the switching element 183. The fourth output terminal of the inverter control unit 19 is a terminal that outputs a gate driving signal for switching between a period of an ON state and a period of an OFF state of the switching element 184 to the first terminal of the switching element 184. The fifth output terminal of the inverter control unit 19 is a terminal that outputs a gate driving signal for switching between a period of an ON state and a period of an OFF state of the switching element 185 to the first terminal of the switching element 185. The sixth output terminal of the inverter control unit 19 is a terminal that outputs a gate driving signal for switching between a period of an ON state and a period of an OFF state of the switching element 186 to the first terminal of the switching element 186. In Fig. 1, the first to sixth output terminals of the inverter control unit 19 are not shown. In Fig. 1, the gate driving signals output from the first to sixth output terminals of the inverter control unit 19 to the bridge circuit 18 are collectively referred to as gate driving signals Spwm. The inverter control unit 19 controls opening and closing of the switching elements in the bridge circuit 18. For example, the inverter control unit 19 generates the gate driving signals Spwm of the switching elements 181 to 186 based on a requested number-of-rotations instruction input from a host device (not shown). The inverter control unit 19 gives the gate driving signals Spwm to the bridge circuit 18 via the first to sixth output terminals. Examples of a specific scheme for inverter control include vector control, sensorless vector control, variable frequency (V/F) control, over-modulation control, one-pulse control, and the like.

The input terminal of the rectifier circuit 5 is connected to the output terminal of the alternating-current power supply 4 and the first input terminal of the zero cross detection unit 17. The input side reference terminal of the rectifier circuit 5 is connected to the reference terminal of the alternating-current power supply 4, the second input terminal of the zero cross detection unit 17, and the input terminal of the input current detection unit 30. The output terminal of the rectifier circuit 5 is connected to the first terminal of the reactor 6a and the first terminal of the reactor 6b. The output side reference terminal of the rectifier circuit 5 is connected to the third terminal of the switching element 8a, the third terminal of the switching element 8b, the second terminal of the smoothing capacitor 12, and the reference terminal (the third terminal of each of the switching elements 182, 184, and 186) of the inverter device 3.

The second terminal of the reactor 6a is connected to the anode terminal of the diode 7a and the second terminal of the switching element 8a. The second terminal of the reactor 6b is connected to the anode terminal of the diode 7b and the second terminal of the switching element 8b.

The cathode terminal of the diode 7a is connected to the cathode terminal of the diode 7b, the first terminal of the smoothing capacitor 12, and the input terminal (the second terminal of each of the switching elements 181, 183, and 185) of the inverter device 3.

The first terminal of the switching element 8a is connected to the first output terminal of the converter control unit 15. The first terminal of the switching element 8b is connected to the second output terminal of the converter control unit 15.

The first terminal of the converter control unit 15 is connected to the output terminal of the input current detection unit 30. The second terminal of the converter control unit 15 is connected to the output terminal of the zero cross detection unit 17.

The first terminal of the switching element 181 is connected to the first output terminal of the inverter control unit 19. The first terminal of the switching element 182 is connected to the second output terminal of the inverter control unit 19. The first terminal of the switching element 183 is connected to the third output terminal of the inverter control unit 19. The first terminal of the switching element 184 is connected to the fourth output terminal of the inverter control unit 19. The first terminal of the switching element 185 is connected to the fifth output terminal of the inverter control unit 19. The first terminal of the switching element 186 is connected to the sixth output terminal of the inverter control unit 19.

The third terminal of the switching element 181 is connected to the second terminal of the switching element 182 and the first terminal of the compressor motor 20. The third terminal of the switching element 183 is connected to the second terminal of the switching element 184 and the second terminal of the compressor motor 20. The third terminal of the switching element 185 is connected to the second terminal of the switching element 186 and the first terminal of the compressor motor 20.

When the foregoing control is realized, a direct-current voltage detection unit and a motor current detection unit may be provided, as described in Patent Document 1.

The direct-current voltage detection unit is a detection unit that detects an input direct-current voltage Vdc of the bridge circuit 18.

The motor current detection unit is a detection unit that detects each of phase currents iu, iv, and iw flowing in the compressor motor 20. The motor current detection unit inputs these detected values Vdc, iu, iv, and iw to the inverter control unit 19. The motor current detection unit may be a unit that detects a current flowing in a negative electrode side power line between the bridge circuit 18 and the smoothing capacitor 12 and acquires the value of each of the phase currents iu, iv, and iw from the detected signals.

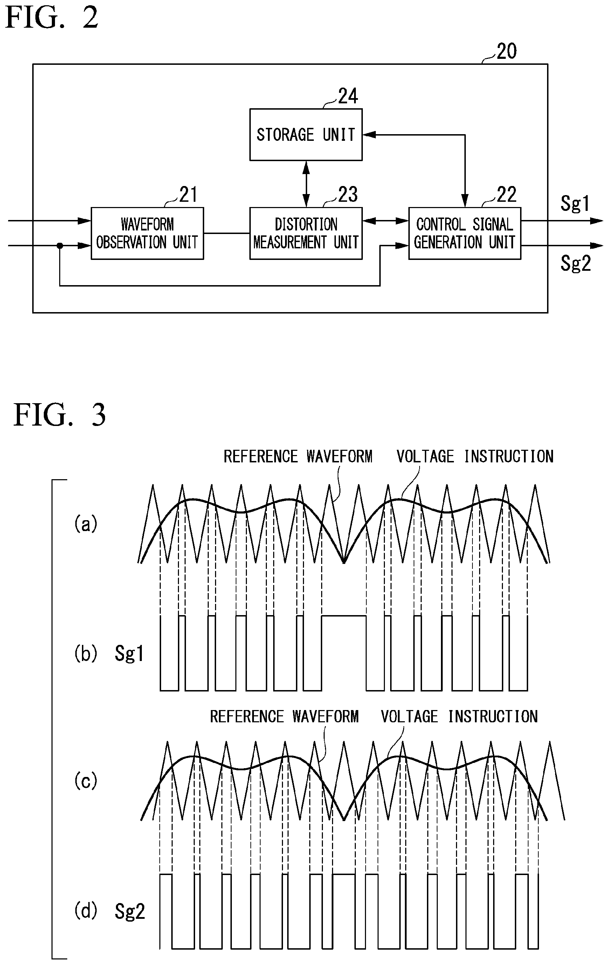

Fig. 2 is a functional block diagram showing the converter control unit 15.

As shown in Fig. 2, the converter control unit 15 includes a waveform observation unit 21, a control signal generation unit 22 (an example of a control unit), a distortion measurement unit 23, and a storage unit 24.

The waveform observation unit 21 receives a zero cross signal indicating a zero cross point of the alternating-current power supply 4 detected by the zero cross detection unit 17 from the zero cross detection unit 17. The waveform observation unit 21 receives the input current waveform from the input current detection unit 30. The waveform observation unit 21 observes the input current waveform using the zero cross point as a reference.

The control signal generation unit 22 generates the first switching signal Sg1 for controlling the switching circuit 10a and the second switching signal Sg2 for controlling the switching circuit 10b.

Specifically, the control signal generation unit 22 generates a predetermined triangular wave and a voltage instruction, as shown in Figs. 3(a) and 3(c). The predetermined triangular wave is a signal with a waveform serving as a reference. The voltage instruction is a signal in which a sinusoidal wave and a harmonic component for which the sinusoidal wave is a fundamental wave are superimposed. The control signal generation unit 22 compares the triangular wave with the voltage instruction and generates the first switching signal Sg1 for controlling the switching element 8a and the second switching signal Sg2 for controlling the switching element 8b, as shown in Figs. 3(b) and 3(d), based on a comparison result.

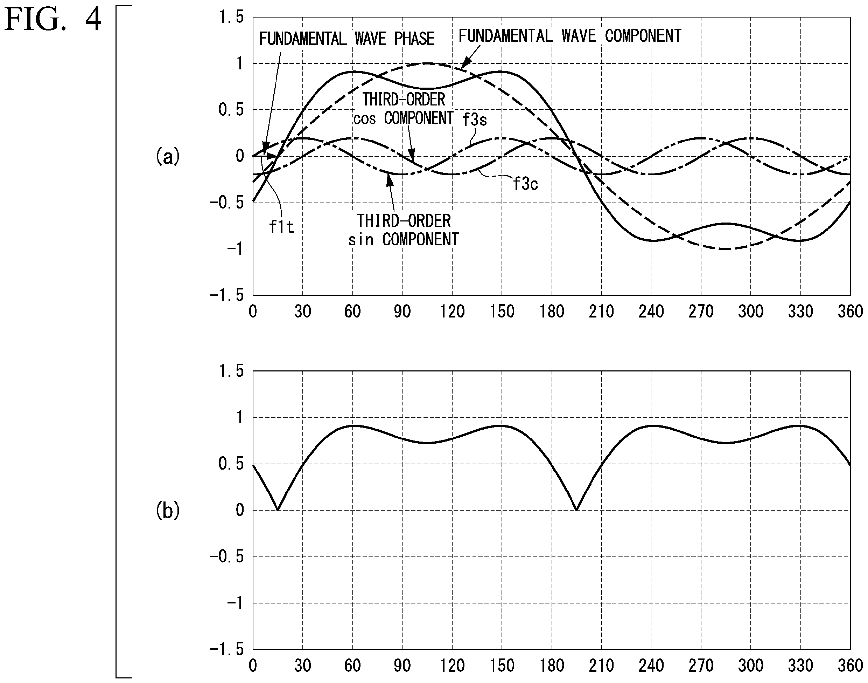

For example, the control signal generation unit 22 takes an absolute value of a signal and sets the absolute value as a voltage instruction as shown in Fig. 4(b), wherein the signal is obtained by superimposing the fundamental wave and a third-order harmonic wave as shown in Fig. 4(a). Here, the control signal generation unit 22 normalizes each of amplitudes of harmonic components using an amplitude of the fundamental wave.

A voltage instruction D in this case can be expressed as in Expression (1) below.
[Math. 1]

$$D = \left| \sin(\theta + f1t) + f3s \times \sin(3\theta) + f3c \times \cos(3\theta) \right| \quad \cdots (1)$$

In Expression (1), a phase difference f1t indicates a phase difference between a power supply voltage and a voltage instruction. An amplitude f3s indicates an amplitude of a sine component of the third-order harmonic wave. An amplitude f3c indicates an amplitude of a cosine component of the third-order harmonic wave.

The example indicated herein shows the third-order harmonic wave as a harmonic wave on which the fundamental wave is superimposed. In another embodiment of the present invention, any odd-order harmonic components up to such as a 5th-order harmonic wave, a 7th-order harmonic wave, or a 9th-order harmonic wave may be superimposed.

Since distortion of a system voltage is normally distortion including only odd-order harmonic components, odd-order harmonic components are superimposed. However, in another embodiment of the present invention, even-order harmonic waves may be also superimposed. For example, when it is known that even-order harmonic waves are superimposed due to interference from the outside, even-order harmonic components may be superimposed with a fundamental wave.

The distortion measurement unit 23 measures distortion of an input current incurred when the control signal generation unit 22 changes the voltage instruction using the phase difference f1t, the amplitude f3s, and the amplitude f3c as parameters, that is, changes the first switching signal Sg1 and the second switching signal Sg2. The measurement of the distortion of the input current performed by the distortion measurement unit 23 is based on the input current waveform received by the waveform observation unit 21. For example, distortion may be calculated from a ratio of each frequency component by a Fourier transform or may be calculated using another technology.

The distortion herein is a distortion ratio μ expressed in Expression (2) below.
[Math. 2]

$$\mu = \frac{\sqrt{I_2{}^2 + I_3{}^2 + I_4{}^2 + \cdots}}{I_1} \quad \cdots (2)$$

In Expression (2), $I_1$ is a fundamental wave current component, $I_2$ is a secondary harmonic current component, $I_3$ is a third-order harmonic current component, and $I_4$ is a fourth harmonic current component.

The control signal generation unit 22 can negate the distortion of the input current by generating the voltage instruction using parameters when the distortion of the input current measured by the distortion measurement unit 23 is the smallest.

The storage unit 24 stores various kinds of information necessary for a process performed by the converter control unit 15. For example, the storage unit 24 stores a measurement result of the distortion measurement unit 23.

Next, a process of the motor driving device 1 according to an embodiment of the present invention will be described.

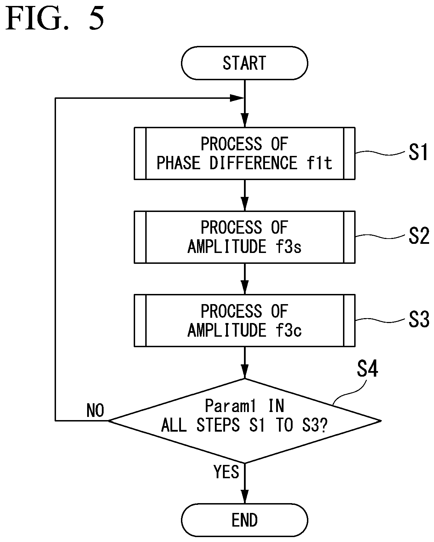

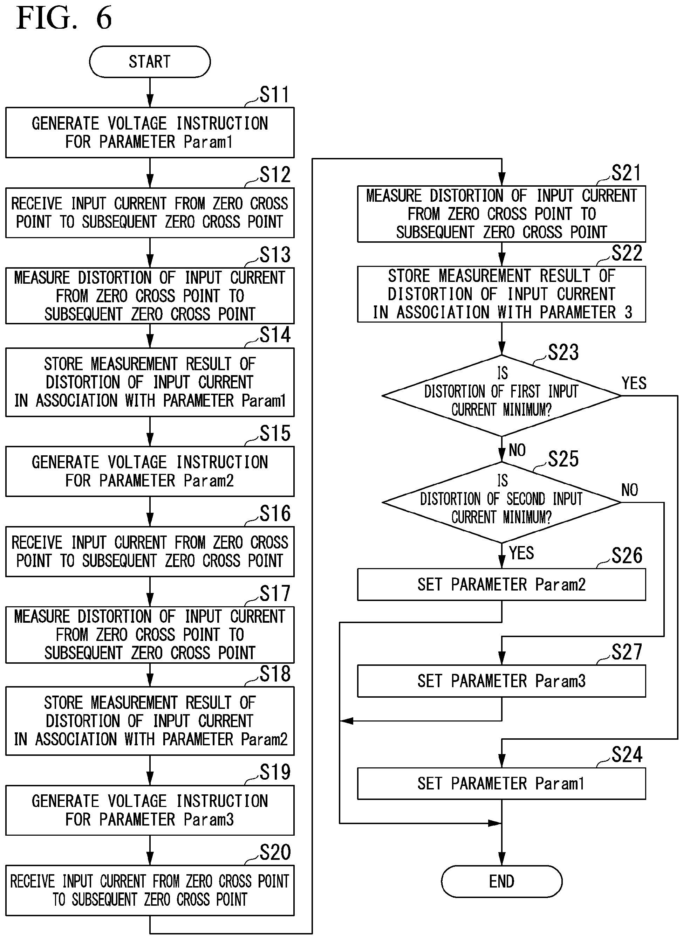

Here, process flows of the converter control unit 15 shown in Figs. 5 and 6 will be described.

The processes of the converter control unit 15 shown in Figs. 5 and 6 is a process performed when the input current flows.

As shown in Fig. 5, the converter control unit 15 performs a process of step S1 of setting the phase difference f1t which is a parameter. The process of step S1 is performed as in the process flow shown in Fig. 6. Specifically, the process of step S1 of setting the phase difference f1t is a process of steps S11a to S27a to be described below.

The control signal generation unit 22 generates initial parameters of the voltage instruction with regard to the phase difference f1t, the amplitude f3s, and the amplitude f3c (step S11a). The initial parameter of the phase difference f1t is set to a phase value f1t1, the initial parameter of the amplitude f3s is set to an amplitude f3s1, and the initial parameter of the amplitude f3c is set to an amplitude f3c1. At this time, a combination of the phase difference f1t1, the amplitude f3s1, and the amplitude f3c1 of the initial parameters is set to a parameter Param1. The control signal generation unit 22 outputs the first switching signal Sg1 generated for the parameter Param1 to the switching circuit 10a and outputs the second switching signal Sg2 generated for the parameter Param1 to the switching circuit 10b. The control signal generation unit 22 outputs a value of the parameter Param1 to the distortion measurement unit 23.

The waveform observation unit 21 receives an input current from a zero cross point to a subsequent zero cross point from the input current detection unit 30 (step S12a). The waveform observation unit 21 outputs a value of the input current from the zero cross point to the subsequent zero cross point to the distortion measurement unit 23.

The distortion measurement unit 23 receives the value of the parameter Param1 from the control signal generation unit 22. The distortion measurement unit 23 receives the value of the input current from the zero cross point to the subsequent zero cross point from the waveform observation unit 21. The distortion measurement unit 23 measures distortion of the input current from the zero cross point to the subsequent zero cross point based on the value of the input current from the zero cross point to the subsequent zero cross point (step S13a). The distortion measurement unit 23 stores a measurement result of the distortion of the input current from the zero cross point to the subsequent zero cross point in the storage unit 24 in association with the parameter Param1 (step S14a). The distortion measurement unit 23 notifies the control signal generation unit 22 of completion of the measurement.

When the control signal generation unit 22 is notified of the completion of the measurement by the distortion measurement unit 23, the control signal generation unit 22 generates a voltage instruction for a phase difference flt2 set to a value larger than the phase difference f1t1 by a smallest set width $\Delta$f1t of the phase difference f1t without changing the amplitude f3s1 and the amplitude f3c1 which are the parameters (step S15a). In this case, a combination of the phase difference flt2, the amplitude f3s1, and the amplitude f3c1 which are the parameters is set to a parameter Param2. The control signal generation unit 22 outputs the first switching signal Sg1 generated for the parameter Param2 to the switching circuit 10a and outputs the second switching signal Sg2 generated for the parameter Param2 to the switching circuit 10b. The control signal generation unit 22 outputs a value of the parameter Param2 to the distortion measurement unit 23.

The waveform observation unit 21 receives the input current from the zero cross point to the subsequent zero cross point from the input current detection unit 30 (step S16a). The waveform observation unit 21 outputs a value of the received input current to the distortion measurement unit 23.

The distortion measurement unit 23 receives the value of the parameter Param2 from the control signal generation unit 22. The distortion measurement unit 23 receives the value of the input current from the zero cross point to the subsequent zero cross point from the waveform observation unit 21. The distortion measurement unit 23 measures distortion of the input current based on the value of the input current (step S17a). The distortion measurement unit 23 stores a measurement result of the distortion of the input current in the storage unit 24 in association with the parameter Param2 (step S18a). The distortion measurement unit 23 notifies the control signal generation unit 22 of completion of the measurement.

When the control signal generation unit 22 is notified of the completion of the measurement by the distortion measurement unit 23, the control signal generation unit 22 generates a voltage instruction for a phase difference flt3 set to a value smaller than the phase difference f1t1 by the smallest set width $\Delta$f1t without changing the amplitude f3s1 and the amplitude f3c1 which are the parameters (step S19a). In this case, a combination of the phase difference f1t3, the amplitude f3s1, and the amplitude f3c1 which are the parameters is set to a parameter Param3. The control signal generation unit 22 outputs the first switching signal Sg1 generated for the parameter Param3 to the switching circuit 10a and outputs the second switching signal Sg2 generated for the parameter Param3 to the switching circuit 10b. The control signal generation unit 22 outputs a value of the parameter Param3 to the distortion measurement unit 23.

The waveform observation unit 21 receives the input current from the input current detection unit 30 (step S20a). The waveform observation unit 21 outputs a value of the received input current to the distortion measurement unit 23.

The distortion measurement unit 23 receives the value of the parameter Param3 from the control signal generation unit 22. The distortion measurement unit 23 receives the value of the input current from the waveform observation unit 21. The distortion measurement unit 23 measures distortion of the input current based on the value of the input current (step S21a). The distortion measurement unit 23 stores a measurement result of the distortion of the input current in the storage unit 24 in association with the parameter Param3 (step S22a). The distortion measurement unit 23 notifies the control signal generation unit 22 of completion of the measurement.

When the control signal generation unit 22 is notified of the completion of the measurement by the distortion measurement unit 23, the control signal generation unit 22 reads a measurement result of the distortion of the input current associated with each of the parameter Param 1, the parameter Param2, and the parameter Param3 from the storage unit 24. The control signal generation unit 22 writes the distortion of the input current for the parameter Param1 as the distortion of the first input current, writes the distortion of the input current for the parameter Param2 as the distortion of the second input current, and writes the distortion of the input current for the parameter Param3 as the distortion of the third input current in the storage unit 24. The control signal generation unit 22 compares the measurement results of the distortions of the first to third input currents and determines whether the distortion of the first input current is the smallest (step S23a).

When the control signal generation unit 22 determines that the distortion of the first input current is the smallest (YES in step S23a), that is, determines that the distortion is the local minimum value at the time of using of the intermediate value (in this case, the phase difference f1t1) among three other phase differences f1t1, f1t1-Δf1t, and f1t1+Δf1t, the control signal generation unit 22 sets the parameter (in this case, the parameter Param1) with which the distortion of the first input current is obtained as a parameter set as a fixed value (step S24a) and moves the process to a process of setting the amplitude f3s which is the parameter.

When the control signal generation unit 22 determines that the distortion of the first input current is not the minimum (NO in step S23a), the control signal generation unit 22 determines whether the distortion of the second input current is the smallest (step S25a).

When the control signal generation unit 22 determines that the distortion of the second input current is the smallest (YES in step S25a), the control signal generation unit 22 sets the parameter (in this case, the parameter Param2) with which the distortion of the second input current is obtained as a parameter set as a fixed value by writing the parameter in, for example, the storage unit 24 (step S26a), and moves the process to a process of setting the amplitude f3s which is the parameter.

When the control signal generation unit 22 determines that the distortion of the second input current is not the smallest (NO in step S25a), the control signal generation unit 22 sets the parameter (in this case, the parameter Param3) with which the distortion of the third input current is obtained as a parameter set as a fixed value (step S27a) and moves the process to a process of setting the amplitude f3s which is the parameter.

Subsequently, the converter control unit 15 performs the process of step S2 of setting the phase difference f3s which is the parameter, as shown in Fig. 5. The process of step S2 is a process of setting the amplitude f3s which is the parameter without changing the parameters other than the amplitude f3 s set in the process of step S1. The process of step S2 shown in Fig. 5 is performed as in the process flow shown in Fig. 6. Specifically, the process of step S2 of setting the amplitude f3s is a process of steps S11b to S27b to be described below.

The control signal generation unit 22 generates a parameter of a voltage instruction using the phase difference f1t, the amplitude f3s, and the amplitude f3c set in the process of step S1 as initial parameters (step S11b). To facilitate the description, the phase difference f1t set in the process of step S1 is set to the phase value f1t1, the amplitude f3 s set in the process of step S1 is set to the amplitude f3s1, and the amplitude f3c set in the process of step S1 is set to the amplitude f3c1. A combination of the phase value f1t1, the amplitude f3s1, and the amplitude f3c1 which are the initial parameters is set as the parameter Param1. The control signal generation unit 22 outputs the first switching signal Sg1 generated for the parameter Param1 to the switching circuit 10a and outputs the second switching signal Sg2 generated for the parameter Param1 to the switching circuit 10b. The control signal generation unit 22 outputs a value of the parameter Param1 to the distortion measurement unit 23.

The waveform observation unit 21 receives an input current from a zero cross point to a subsequent zero cross point from the input current detection unit 30 (step S12b). The waveform observation unit 21 outputs a value of the input current from the zero cross point to the subsequent zero cross point to the distortion measurement unit 23.

The distortion measurement unit 23 receives the value of the parameter Param1 from the control signal generation unit 22. The distortion measurement unit 23 receives the value of the input current from the zero cross point to the subsequent zero cross point from the waveform observation unit 21. The distortion measurement unit 23 measures distortion of the input current from the zero cross point to the subsequent zero cross point based on the value of the input current from the zero cross point to the subsequent zero cross point (step S13b). The distortion measurement unit 23 stores a measurement result of the distortion of the input current from the zero cross point to the subsequent zero cross point in the storage unit 24 in association with the parameter Param1 (step S14b). The distortion measurement unit 23 notifies the control signal generation unit 22 of completion of the measurement.

When the control signal generation unit 22 is notified of the completion of the measurement by the distortion measurement unit 23, the control signal generation unit 22 generates a voltage instruction for a amplitude f3 s2 set to a value larger than the amplitude f3s1 by a smallest set width Δf3s of the amplitude f3s without changing the phase difference f1t1 and the amplitude f3c1 which are the parameters (step S15b). In this case, a combination of the phase difference f1t1, the amplitude f3s2, and the amplitude f3c1 which are the parameters is set to the parameter Param2. The control signal generation unit 22 outputs the first switching signal Sg1 generated for the parameter Param2 to the switching circuit 10a and outputs the second switching signal Sg2 generated for the parameter Param2 to the switching circuit 10b. The control signal generation unit 22 outputs a value of the parameter Param2 to the distortion measurement unit 23.

The waveform observation unit 21 receives the input current from the zero cross point to the subsequent zero cross point from the input current detection unit 30 (step S16b). The waveform observation unit 21 outputs a value of the received input current to the distortion measurement unit 23.

The distortion measurement unit 23 receives the value of the parameter Param2 from the control signal generation unit 22. The distortion measurement unit 23 receives the value of the input current from the zero cross point to the subsequent zero cross point from the waveform observation unit 21. The distortion measurement unit 23 measures distortion of the input current based on the value of the input current (step S17b). The distortion measurement unit 23 stores a measurement result of the distortion of the input current in the storage unit 24 in association with the parameter Param2 (step S18b). The distortion measurement unit 23 notifies the control signal generation unit 22 of completion of the measurement.

When the control signal generation unit 22 is notified of the completion of the measurement by the distortion measurement unit 23, the control signal generation unit 22 generates a voltage instruction for a amplitude f3s3 set to a value smaller than the amplitude f3s1 by the smallest set width Δf3s without changing the phase difference f1t1 and the amplitude f3c1 which are the parameters (step S19b). In this case, a combination of the phase difference f1t1, the amplitude f3s3, and the amplitude f3c1 which are the parameters is set to a parameter Param3. The control signal generation unit 22 outputs the first switching signal Sg1 generated for the parameter Param3 to the switching circuit 10a and outputs the second switching signal Sg2 generated for the parameter Param3 to the switching circuit 10b. The control signal generation unit 22 outputs a value of the parameter Param3 to the distortion measurement unit 23.

The waveform observation unit 21 receives the input current from the input current detection unit 30 (step S20b). The waveform observation unit 21 outputs a value of the received input current to the distortion measurement unit 23.

The distortion measurement unit 23 receives the value of the parameter Param3 from the control signal generation unit 22. The distortion measurement unit 23 receives the value of the input current from the waveform observation unit 21. The distortion measurement unit 23 measures distortion of the input current based on the value of the input current (step S21b). The distortion measurement unit 23 stores a measurement result of the distortion of the input current in the storage unit 24 in association with the parameter Param3 (step S22b). The distortion measurement unit 23 notifies the control signal generation unit 22 of completion of the measurement.

When the control signal generation unit 22 is notified of the completion of the measurement by the distortion measurement unit 23, the control signal generation unit 22 reads a measurement result of the distortion of the input current associated with each of the parameter Param 1, the parameter Param2, and the parameter Param3 from the storage unit 24. The control signal generation unit 22 writes the distortion of the input current for the parameter Param1 as the distortion of the first input current, writes the distortion of the input current for the parameter Param2 as the distortion of the second input current, and writes the distortion of the input current for the parameter Param3 as the distortion of the third input current in the storage unit 24. The control signal generation unit 22 compares the measurement results of the distortions of the first to third input currents and determines whether the distortion of the first input current is the smallest (step S23b).

When the control signal generation unit 22 determines that the distortion of the first input current is the smallest (YES in step S23b), that is, determines that the distortion is the local minimum value at the time of using of the intermediate value (in this case, the amplitude f3s1) among three different amplitudes f3s1, f3s1-Δf3s, and f3s1+Δf3s, the control signal generation unit 22 sets the parameter (in this case, the parameter Param1) with which the distortion of the first input current is obtained as a parameter set as a fixed value by writing the parameter in, for example, the storage unit 24 (step S24b) and moves the process to a process of setting the amplitude f3c which is the parameter.

When the control signal generation unit 22 determines that the distortion of the first input current is not the smallest (NO in step S23b), the control signal generation unit 22 determines whether the distortion of the second input current is the smallest (step S25b).

When the control signal generation unit 22 determines that the distortion of the second input current is the smallest (YES in step S25b), the control signal generation unit 22 sets the parameter (in this case, the parameter Param2) with which the distortion of the second input current is obtained as a parameter set as a fixed value (step S26b), and moves the process to a process of setting the amplitude f3c which is the parameter.

When the control signal generation unit 22 determines that the distortion of the second input current is not the smallest (NO in step S25b), the control signal generation unit 22 sets the parameter (in this case, the parameter Param3) with which the distortion of the third input current is obtained as a parameter set as a fixed value (step S27b) and moves the process to a process of setting the amplitude f3c which is the parameter.

Subsequently, the converter control unit 15 performs the process of step S3 of setting the phase difference f3c which is the parameter, as shown in Fig. 5. The process of step S3 is a process of setting the amplitude f3c which is the parameter without changing the parameters other than the amplitude f3c set in the process of step S2. The process of step S3 shown in Fig. 5 is performed as in the process flow shown in Fig. 6. Specifically, the process of step S3 of setting the amplitude f3c is a process of steps S11c to S27c to be described below.

The control signal generation unit 22 generates a parameter of a voltage instruction using the phase difference f1t, the amplitude f3s, and the amplitude f3c set in the process of step S2 as initial parameters (step S11c). To facilitate the description, the phase difference f1t set in the process of step S2 is set to the phase value f1t1, the amplitude f3s set in the process of step S2 is set to the amplitude f3sl, and the amplitude f3c set in the process of step S2 is set to the amplitude f3c1. At this time, a combination of the phase value f1t1, the amplitude f3s1, and the amplitude f3c1 which are the initial parameters is set as the parameter Param1. The control signal generation unit 22 outputs the first switching signal Sg1 generated for the parameter Param1 to the switching circuit 10a and outputs the second switching signal Sg2 generated for the parameter Param1 to the switching circuit 10b. The control signal generation unit 22 outputs a value of the parameter Param1 to the distortion measurement unit 23.

The waveform observation unit 21 receives an input current from a zero cross point to a subsequent zero cross point from the input current detection unit 30 (step S12c). The waveform observation unit 21 outputs a value of the input current from the zero cross point to the subsequent zero cross point to the distortion measurement unit 23.

The distortion measurement unit 23 receives the value of the parameter Param1 from the control signal generation unit 22. The distortion measurement unit 23 receives the value of the input current from the zero cross point to the subsequent zero cross point from the waveform observation unit 21. The distortion measurement unit 23 measures distortion of the input current from the zero cross point to the subsequent zero cross point based on the value of the input current from the zero cross point to the subsequent zero cross point (step S13c). The distortion measurement unit 23 stores a measurement result of the distortion of the input current from the zero cross point to the subsequent zero cross point in the storage unit 24 in association with the parameter Param1 (step S14c). The distortion measurement unit 23 notifies the control signal generation unit 22 of completion of the measurement.

When the control signal generation unit 22 is notified of the completion of the measurement by the distortion measurement unit 23, the control signal generation unit 22 generates a voltage instruction for an amplitude f3c2 set to a value larger than the amplitude f3c1 by a smallest set width Δf3c of the amplitude f3c without changing the phase difference f1t1 and the amplitude f3s1 which are the parameters (step S15c). In this case, a combination of the phase difference f1t1, the amplitude f3s1, and the amplitude f3c2 which are the parameters is set to the parameter Param2. The control signal generation unit 22 outputs the first switching signal Sg1 generated for the parameter Param2 to the switching circuit 10a and outputs the second switching signal Sg2 generated for the parameter Param2 to the switching circuit 10b. The control signal generation unit 22 outputs a value of the parameter Param2 to the distortion measurement unit 23.

The waveform observation unit 21 receives the input current from the zero cross point to the subsequent zero cross point from the input current detection unit 30 (step S16c). The waveform observation unit 21 outputs a value of the received input current to the distortion measurement unit 23.

The distortion measurement unit 23 receives the value of the parameter Param2 from the control signal generation unit 22. The distortion measurement unit 23 receives the value of the input current from the zero cross point to the subsequent zero cross point from the waveform observation unit 21. The distortion measurement unit 23 measures distortion of the input current based on the value of the input current (step S17c). The distortion measurement unit 23 stores a measurement result of the distortion of the input current in the storage unit 24 in association with the parameter Param2 (step S18c). The distortion measurement unit 23 notifies the control signal generation unit 22 of completion of the measurement.

When the control signal generation unit 22 is notified of the completion of the measurement by the distortion measurement unit 23, the control signal generation unit 22 generates a voltage instruction for an amplitude f3c3 set to a value smaller than the amplitude f3c1 by the smallest set width Δf3c without changing the phase difference f1t1 and the amplitude f3s1 which are the parameters (step S19c). In this case, a combination of the phase difference f1t1, the amplitude f3s1, and the amplitude f3c3 which are the parameters is set to a parameter Param3. The control signal generation unit 22 outputs the first switching signal Sg1 generated for the parameter Param3 to the switching circuit 10a and outputs the second switching signal Sg2 generated for the parameter Param3 to the switching circuit 10b. The control signal generation unit 22 outputs a value of the parameter Param3 to the distortion measurement unit 23.

The waveform observation unit 21 receives the input current from the input current detection unit 30 (step S20c). The waveform observation unit 21 outputs a value of the received input current to the distortion measurement unit 23.

The distortion measurement unit 23 receives the value of the parameter Param3 from the control signal generation unit 22. The distortion measurement unit 23 receives the value of the input current from the waveform observation unit 21. The distortion measurement unit 23 measures distortion of the input current based on the value of the input current (step S21c). The distortion measurement unit 23 stores a measurement result of the distortion of the input current in the storage unit 24 in association with the parameter Param3 (step S22c). The distortion measurement unit 23 notifies the control signal generation unit 22 of completion of the measurement.

When the control signal generation unit 22 is notified of the completion of the measurement by the distortion measurement unit 23, the control signal generation unit 22 reads a measurement result of the distortion of the input current associated with each of the parameter Param 1, the parameter Param2, and the parameter Param3 from the storage unit 24. The control signal generation unit 22 writes the distortion of the input current for the parameter Param1 as the distortion of the first input current, writes the distortion of the input current for the parameter Param2 as the distortion of the second input current, and writes the distortion of the input current for the parameter Param3 as the distortion of the third input current in the storage unit 24. The control signal generation unit 22 compares the measurement results of the distortions of the first to third input currents and determines whether the distortion of the first input current is the smallest (step S23c).

When the control signal generation unit 22 determines that the distortion of the first input current is the smallest (YES in step S23c), that is, determines that the distortion is the local minimum value at the time of using of the intermediate value (in this case, the phase difference f3c1) among three other amplitudes f3c1, f3c1-$\Delta$f3c, and f3c1+$\Delta$f3c, the control signal generation unit 22 sets the parameter (in this case, the parameter Param1) with which the distortion of the first input current is obtained as a parameter set as a fixed value by writing the parameter in, for example, the storage unit 24 (step S24c).

Then, the control signal generation unit 22 moves the process to the process of step S4 of determining whether the parameter Param1 is set in all the steps, steps S1, S2, and S3 shown in Fig. 5.

When the control signal generation unit 22 determines that the distortion of the first input current is not the smallest (NO in step S23c), the control signal generation unit 22 determines whether the distortion of the second input current is the smallest (step S25c).

When the control signal generation unit 22 determines that the distortion of the second input current is the smallest (YES in step S25c), the control signal generation unit 22 sets the parameter (in this case, the parameter Param2) with which the distortion of the second input current is obtained as a parameter set as a fixed value (step S26c).

Then, the control signal generation unit 22 moves the process to the process of step S4 of determining whether the parameter Param1 is set in all the steps, steps S1, S2, and S3 shown in Fig. 5.

In addition, when the control signal generation unit 22 determines that the distortion of the second input current is not the smallest (NO in step S25c), the control signal generation unit 22 sets the parameter (in this case, the parameter Param3) with which the distortion of the third input current is obtained as a parameter set as a fixed value (step S27c).

Then, the control signal generation unit 22 moves the process to the process of step S4 of determining whether the parameter Param1 is set in all the steps, steps S1, S2, and S3 shown in Fig. 5.

When the control signal generation unit 22 determines in the process of step S4 that the parameter Param1 is not set in at least one step among steps S1, S2, and S3, the process returns to the process of step S1.

In addition, when the control signal generation unit 22 determines in the process of step S4 that the parameter Param1 is set in all the steps, steps S1, S2, and S3, the processes are completed.

The control signal generation unit 22 generates a voltage instruction using the set phase difference flt, amplitude f3c, and amplitude f3s as the parameters.

In the processes of the motor driving device 1 according to the embodiment of the present invention described with reference to Figs. 5 and 6, by averaging the measurement results of the input currents corresponding to a natural number with regard to the input current from the zero cross point to the subsequent zero cross point, it is possible to reduce an influence of noise or a load variation applied to the compressor motor 20.

The motor driving device 1 according to an embodiment of the present invention has been described.

In the driving device 1 according to the embodiment of the present invention, the control signal generation unit 22 (a control unit) generates the first switching signal Sg1 and the second switching signal Sg2 (control signals) for controlling a current flowing in the converter circuit in which the current in accordance with a difference voltage between both ends of the reactor 6a or 6b flows. The distortion measurement unit 23 measures the distortion of the current flowing in the converter circuit with regard to the plurality of first switching signal Sg1 and second switching signal Sg2 (the control signals) generated by the control signal generation unit 22.

In this way, the motor driving device 1 can control the converter circuit in which the current in accordance with the difference voltage between both ends of the reactor 6a or 6b flows using the generated first switching signal Sg1 and second switching signal Sg2 (the control signals) generated by the control signal generation unit 22 and can reduce the distortion of the input current incurred due to the distortion of the power supply voltage.

In the embodiment of the present invention, the example in which the converter control unit 15 calculates the local minimum value of the distortion has been described. However, in another embodiment of the present invention, a smallest value of distortion may be calculated. In another embodiment of the present invention, for example, the converter control unit 15 may measure input current distortion with regard to all of the parameters which can be taken and specify a smallest value of the distortion. The converter control unit 15 may specify the smallest value of the distortion in accordance with another method.

In the embodiment of the present invention, the method in which the converter control unit 15 specifies the local minimum value of the distortion is not limited to the foregoing method. In the embodiment of the present invention, as the method in which the converter control unit 15 specifies the local minimum value of the distortion, another method such as the Newton method may be used.

In the embodiment of the present invention, the example in which the distortion (the distortion ratio $\mu$) is calculated has been described. However, in the other embodiment of the present invention, a total power factor PF expressed in Expression (3) below may be used instead of the distortion.

[Math. 3]

$$\mathrm{PF} = \frac{1}{\sqrt{1+\mu^2}} \cos \phi \qquad \cdot \cdot \cdot (3)$$

In Expression (3), a sign $\phi$ is a phase difference between a voltage and a current in the alternating-current power supply 4. In this way, when the total power factor is used, an input current can be adjusted to be reduced including a power factor $\cos\phi$. This is based on an idea that reactive power $VI\sin\phi$ of an input of the converter device 2 is reduced and apparent power VI which is a square root of sum of a square of active power and a square of reactive power is also reduced when a power factor of the converter device 2 becomes better since the active power $VI\cos\phi$ of the input of the converter device 2 is determined by the inverter device 3 irrespective of an operation of the converter device 2.

In the embodiment of the present invention, the example in which the alternating-current power supply 4 serves as a single-phase power supply has been described. However, in another embodiment of the present invention, the alternating-current power supply 4 may be a three-phase power supply. When the alternating-current power supply 4 is the three-phase power supply, harmonic components superimposed in the fundamental wave may be (6n-1)-order and (6n+1)-order harmonic waves (where n is an integer equal to or greater than 1).

The storage unit 24 or another storage unit in the embodiment of the present invention may be included anywhere within a scope in which appropriate information is transmitted and received. The plurality of storage units 24 or other storage units may be included within the scope in which appropriate information is transmitted and received so that data is distributed and stored.

The procedure of the process in the embodiment of the present invention may be exchanged within a scope in which an appropriate process is performed.

The storage unit 24 or a storage device (including a resister or a latch) in the embodiment of the present invention may each be included anywhere within a scope in which appropriate information is transmitted and received. The plurality of storage units 24 or storage devices may be included within the scope in which appropriate information is transmitted and received so that data is distributed and stored.

The embodiment of the present invention has been described, but the converter control unit 15, the inverter control unit 19, and another control device described above may include a computer system therein. The progress of the above-described process is stored in a computer-readable recording medium in a format of a program and the foregoing program is performed when the program is read and executed by a computer. A specific example of the computer will be described below.

Fig. 6 is a schematic diagram showing a configuration of a computer according to at least one embodiment.

A computer 50 includes a CPU 60, a main memory 70, a storage 80, and an interface 90, as shown in Fig. 6.

For example, the above-described converter control unit 15, the inverter control unit 19, and another control device are each mounted on the computer 50. The operation of each of the above-described processing units is stored in the storage 80 in a format of a program. The CPU 60 reads a program from the storage 80, loads the program in the main memory 70, and performs the foregoing process in accordance with the program. The CPU 60 guarantees a storage region corresponding to each of the above-described storage units in the main memory 70 in accordance with the program.

Examples of the storage 80 include a hard disk drive (HDD), a solid-state drive (SSD), a magnetic disk, a magneto-optical disc, a compact disc read-only memory (CD-ROM), a digital versatile disc read-only memory (DVD-ROM), a semiconductor memory, and the like. The storage 80 may be an internal medium directly connected to a bus of the computer 50 or may be an external medium connected to the computer 50 via the interface 90 or a communication line. When the program is delivered to the computer 50 via the communication line, the computer 50 to which the program is delivered may load the program in the main memory 70 and execute the process. In at least one embodiment, the storage 80 is a non-transitory storage medium.

The program may realize some of the above-described functions. Further, the program may be a file, a so-called differential file (differential program) which can realize the above-described functions by combining a program previously recorded in the computer system.

Several embodiments of the present invention have been described, but the embodiments are exemplary and do not limit the scope of the present invention. Various additions, various omissions, various substitutions, and various changes of the embodiments may be made within the scope of the present invention without departing from the gist of the present invention.

[Industrial Applicability]

The control device, the control method, and the program according to an embodiment of the present invention can reduce distortion of an input current incurred due to distortion of a power supply voltage in a circuit in which a current in accordance with a difference voltage between both ends of a reactor flows.

[Reference Signs List]

    1 Motor driving device
    2 Converter device
    3 Inverter device
    4 Alternating-current power supply
    5 Rectifier circuit
    6a, 6b Reactor
    7a, 7b Diode
    8a, 8b Switching element
    10a, 10b Switching circuit
    12 Smoothing capacitor
    15 Converter control unit
    17 Zero cross detection unit
    21 Waveform observation unit
    22 Control signal generation unit
    23 Distortion measurement unit
    24 Storage unit
    30 Input current detection unit
    50 Computer
    60 CPU
    70 Main memory
    80 Storage
    90 Interface
    Lp Positive electrode bus bar

**Claims**

**1.** A control device comprising:

> a control unit configured to generate a plurality of control signals for controlling a current flowing in a circuit in which a current in accordance with a difference voltage between both ends of a reactor flows; and
> a distortion measurement unit configured to measure distortion of the current flowing in the circuit with regard to the plurality of control signals.

**2.** The control device according to claim 1,
wherein the control unit is configured to generate a plurality of control signals for controlling a current flowing in a converter circuit in which the current in accordance with the difference voltage between both ends of the reactor flows, and
wherein the distortion measurement unit is configured to measure distortion of the current flowing in the converter circuit with regard to the plurality of control signals.

**3.** The control device according to claim 1 or 2, wherein the control unit is configured to generate the control signal with regard to distortion which is a local minimum value or a smallest value among the distortions with regard to the plurality of control signals and to control the circuit using the generated control signal.

4. A control method comprising the steps of:

generating a plurality of control signals for controlling a current flowing in a circuit in which a current in accordance with a difference voltage between both ends of a reactor flows; and
measuring distortion of the current flowing in the circuit with regard to the plurality of control signals.

5. A program which causes a computer to execute the steps of:

generating a plurality of control signals for controlling a current flowing in a circuit in which a current in accordance with a difference voltage between both ends of a reactor flows; and
measuring distortion of the current flowing in the circuit with regard to the plurality of control signals.

FIG. 1

EP 3 672 051 A1

# FIG. 2

# FIG. 3

FIG. 4

(a)

(b)

# FIG. 5

```
                    ┌──────────┐
                    │  START   │
                    └────┬─────┘
         ┌───────────────┤
         │               ▼
         │    ┌─────────────────────────┐
         │    │      PROCESS OF         │ ──── S1
         │    │  PHASE DIFFERENCE f1t   │
         │    └───────────┬─────────────┘
         │                ▼
         │    ┌─────────────────────────┐
         │    │      PROCESS OF         │ ──── S2
         │    │     AMPLITUDE f3s       │
         │    └───────────┬─────────────┘
         │                ▼
         │    ┌─────────────────────────┐
         │    │      PROCESS OF         │ ──── S3
         │    │     AMPLITUDE f3c       │
         │    └───────────┬─────────────┘
         │                ▼        S4
         │          ╱─────────────╲
         │   NO    ╱   Param1 IN    ╲
         └────────╱ ALL STEPS S1 TO S3?╲
                  ╲                   ╱
                   ╲─────────────────╱
                          │ YES
                          ▼
                    ┌──────────┐
                    │   END    │
                    └──────────┘
```

# FIG. 6

START

GENERATE VOLTAGE INSTRUCTION
FOR PARAMETER Param1 — S11

RECEIVE INPUT CURRENT FROM ZERO CROSS
POINT TO SUBSEQUENT ZERO CROSS POINT — S12

MEASURE DISTORTION OF INPUT CURRENT
FROM ZERO CROSS POINT TO
SUBSEQUENT ZERO CROSS POINT — S13

STORE MEASUREMENT RESULT OF
DISTORTION OF INPUT CURRENT
IN ASSOCIATION WITH PARAMETER Param1 — S14

GENERATE VOLTAGE INSTRUCTION
FOR PARAMETER Param2 — S15

RECEIVE INPUT CURRENT FROM ZERO CROSS
POINT TO SUBSEQUENT ZERO CROSS POINT — S16

MEASURE DISTORTION OF INPUT CURRENT
FROM ZERO CROSS POINT TO
SUBSEQUENT ZERO CROSS POINT — S17

STORE MEASUREMENT RESULT OF
DISTORTION OF INPUT CURRENT
IN ASSOCIATION WITH PARAMETER Param2 — S18

GENERATE VOLTAGE INSTRUCTION
FOR PARAMETER Param3 — S19

RECEIVE INPUT CURRENT FROM ZERO CROSS POINT
TO SUBSEQUENT ZERO CROSS POINT — S20

MEASURE DISTORTION OF INPUT CURRENT
FROM ZERO CROSS POINT TO
SUBSEQUENT ZERO CROSS POINT — S21

STORE MEASUREMENT RESULT OF
DISTORTION OF INPUT CURRENT
IN ASSOCIATION WITH PARAMETER 3 — S22

S23 — IS DISTORTION OF FIRST INPUT CURRENT MINIMUM? — YES

NO

S25 — IS DISTORTION OF SECOND INPUT CURRENT MINIMUM? — NO

YES

SET PARAMETER Param2 — S26

SET PARAMETER Param3 — S27

SET PARAMETER Param1 — S24

END

FIG. 7

**INTERNATIONAL SEARCH REPORT**

| International application No. |
| --- |
| PCT/JP2018/030920 |

**A. CLASSIFICATION OF SUBJECT MATTER**
Int.Cl. H02M3/155(2006.01)i

According to International Patent Classification (IPC) or to both national classification and IPC

**B. FIELDS SEARCHED**

Minimum documentation searched (classification system followed by classification symbols)
Int.Cl. H02M3/155

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2016-46946 A (AISIN SEIKI CO., LTD.) 04 April 2016, paragraphs [0004]-[0040], fig. 1-5 (Family: none) | 1-5 |
| Y | JP 2014-150622 A (MITSUBISHI HEAVY INDUSTRIES, LTD.) 21 August 2014, paragraphs [0007]-[0049], fig. 1-10 & WO 2014/119033 A1 & EP 2924861 A1, paragraphs [0007]-[0076], fig. 1-10 & CN 104885351 A | 1-5 |

☐ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18.10.2018 | 06.11.2018 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**EP 3 672 051 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017186239 A
- JP 2014150622 A